# EUROPÄISCHE PATENTANMELDUNG

(11) **EP 1 464 538 A1**
(43) Veröffentlichungstag der Anmeldung: **06.10.2004**
(21) Anmeldenummer: 04007548.3
(22) Anmeldetag: 29.03.2004
(51) Int. Cl.: B60P 7/08, B60N 3/04

(54) **Rutschhemmende Matte**

(30) Priorität: 02.04.2003 DE 20305280 U
(71) Anmelder: C.F. PLOUCQUET GmbH & Co., 89522 Heidenheim (DE); Günther, Joachim, D-86165 Augsburg (DE)
(72) Erfinder: Haas, Richard, 89558 Böhmenkirch (DE)
(74) Vertreter: Schmid, Wolfgang

(57) **Zusammenfassung**

Eine rutschhemmende Matte, insbesondere zur Sicherung von Ladungen weist eine Zusammensetzung aus natürlichen und/oder synthetischen Fasern (3) im Verbund mit Klebefasern (4) auf. Wenigstens eine Seitenfläche der Matte (1) ist mit einer Polymerschicht (5) versehen.

## Beschreibung

Die Erfindung betrifft eine rutschhemmende Matte, insbesondere zur Sicherung von Ladungen.

Derartige auch als "Anti-Rutschmatten" bezeichnete Matten werden in unterschiedlichen Bereichen eingesetzt, um darauf abgestellte Gegenstände gegen ein seitliches Verrutschen zu sichern.

Ein besonders wichtiges Einsatzgebiet derartiger rutschhemmender Matten ist die Rutschsicherung in Kofferräumen von Kraftfahrzeugen. Durch die im Fahrbetrieb auftretenden Kräfte bei Kurvenfahrten, beim Bremsen und beim Beschleunigen werden Gegenstände, die auf die üblichen Kofferraumböden abgestellt sind, im Kofferraum verschoben.

Anti-Rutschmatten dienen auch häufig dazu, Ladungen auf glatten Ladeflächen, beispielsweise von Transportfahrzeugen gegen ein seitliches Verrutschen zu sichern. Dabei unterstützen die Anti-Rutschmatten die eingesetzten Zurrgurte bzw. entlasten diese. Bei der zu sichernden Ladung kann es sich beispielsweise um Spanplattenpakete, Blechpakete, Papier-Coils oder dergleichen handeln.

Die auf dem Markt bekannten rutschhemmenden Matten bestehen aus Materialien, die eine verhältnismäßig hohe Haftreibung aufweisen. Bekannt sind dabei Gummimatten bzw. gitterförmig aufgebaute Matten aus einem Polymer.

Neben solchen reibschlüssig wirkenden Matten sind auch formschlüssig wirkende Matten bekannt. Hierzu wird auf die DE 199 05 642 A1 verwiesen die eine Matte zur Einlage in einem Kofferraum eines Kraftfahrzeuges zeigt, welche aus einem flexiblen, elastischen Kunststoffmaterial, beispielsweise Ethylen-Vinylacetat (EAV), gebildet ist. Die Kunststoffmatte ist auf beiden Seiten jeweils mit einer Schar von konzentrisch verlaufenden scharfkantigen Rippe versehen.

Von Nachteil bei den bisher bekannten rutschhemmenden Matten sind die relativ hohen Herstellungskosten. Darüber hinaus muss die Entsorgung derartiger Matten als Sondermüll erfolgen. Insbesondere, wenn die rutschhemmende Matte eine spezielle formschlüssige Verbindung aufweist lässt sich eine individuelle Bedruckung, beispielsweise zu Werbezwecken nur schwer realisieren.

Problematisch bei rutschhemmenden Matten ist darüber hinaus, dass diese einerseits flexibel sein sollen, damit sich die Matte dem Untergrund anpassen kann, andererseits muss die Matte sehr robust und reißfest sein, damit auch schwere Ladungen, wie z.B. Papier-Coils, transportiert werden können ohne dass die Matte zerreißt bzw. einrollt. Wichtig ist darüber hinaus ein geringes Gewicht sowie eine platzsparende Dicke.

Der vorliegenden Erfindung liegt daher die Aufgabe zugrunde, eine rutschhemmende Matte zu schaffen, die einfach und kostengünstig herstellbar ist, eine einfache, umweltfreundliche Entsorgung ermöglicht und die bei einem geringen Gewicht und einer geringen Dicke robust und reißfest ist und trotzdem flexibel bleibt.

Erfindungsgemäß wird diese Aufgabe gelöst durch eine Zusammensetzung aus natürlichen und/oder synthetischen Fasern in Verbindung mit Klebefasern, wobei wenigstens eine Seite der Matte mit einer Polymerschicht versehen ist.

Wie sich in Versuchen herausgestellt hat, ergeben sich durch diesen Aufbau hervorragende Hafteigenschaften auf den verschiedensten Untergründen und Oberflächen, kombiniert mit voller Flexibilität und geringem Gewicht. Daraus ergibt sich ein idealer Einsatz der rutschhemmenden Matte in den verschiedensten Bereichen. Die erfindungsgemäße Rutschmatte kann in Bereichen eingesetzt werden, in denen die bisher bekannten Anti-Rutschmatten aufgrund ihres höheren Gewichts und des starren Aufbaus nicht eingesetzt werden konnten.

Das geringe Gewicht der erfindungsgemäßen Lösung ergibt sich aus den natürlichen und/oder synthetischen Fasern im Verbund mit Klebefasern. Daraus resultiert auch die Flexibilität der Matte. Je nachdem wie hoch der Anteil der Klebefasern im Verhältnis zu den natürlichen und/oder synthetischen Fasern ist, desto robuster und reißfester wird die gesamte Matte. Die Matte wird dadurch jedoch auch unflexibler, so dass ein ausgewogenes Verhältnis zwischen den Fasern und den Klebefasern zur Optimierung des Produktes bedeutsam ist.

Von Vorteil ist es dabei, wenn die aus den Fasern/Klebfasern gebildete Materialschicht einen Anteil von 50 bis 80 Gewichtsprozent, vorzugsweise 65 Prozent natürliche und/oder synthetische Fasern und 20 bis 50 Gewichtsprozent, vorzugsweise 35 Prozent Klebefasern aufweist.

Die innige Fasermischung bewirkt eine hohe Stabilität bzw. Festigkeit und verhindert bzw. minimiert dadurch ein Einrollen der Matte.

Ein derartiges Verhältnis zwischen den Fasern und den Klebefasern hat sich als besonders geeignet hinsichtlich einer hohen Flexibilität sowie eines robusten und reißfesten Aufbaus der Materialschicht herausgestellt. Die erfindungsgemäße Zusammensetzung der rutschhemmenden Matte ermöglicht es, diese sehr platzsparend, beispielsweise nur 4 mm dick auszugestalten. Trotzdem ist gewährleistet, dass diese auch bei der Anordnung von schweren Gütern auf der rutschhemmenden Matte, wie z.B. Papier-Coils, nicht zerreißt.

Ein weiterer Vorteil der erfindungsgemäßen Matte besteht darin, dass diese mit herkömmlichen Mitteln, beispielsweise einer Schere, leicht in eine individuelle Form gebracht werden kann. Darüber hinaus ist die Entsorgung der Matte über den Hausmüll möglich. Die rutschhemmende Matte kann außerdem recycelt werden.

Wie sich in Versuchen gezeigt hat lässt sich die Matte einfach, schnell und kostengünstig herstellen. Dies gilt insbesondere auch aufgrund der kostengünstigen Materialien.

Durch die Beschichtung wenigstens einer Seite der Matte mit einer Polymerschicht, wird eine besonders hohe Haftreibung erzielt, die eine hohe Haltekraft auf die aufliegende Oberfläche bzw. die Ladung ausübt.

Die Polymerschicht kann in einfacher Weise individuell, ohne Verlust der Hafteigenschaften, bedruckt werden.

Von Vorteil ist es, wenn beide Seitenflächen der Matte mit einer rutschhemmenden bzw. blockenden Polymerschicht versehen sind und die Polymerschicht als Polyurethanschicht ausgebildet ist.

Die Polyurethanschicht weist eine besonders gute Hafteigenschaft auf, welche blockend, jedoch nicht klebend auf die aufgebrachten Gegenstände wirkt. Dadurch ist die Funktionsoberfläche abwischbar, um den Ausgangseffekt wieder zu erreichen.

Erfindungsgemäß kann ferner vorgesehen sein, dass die natürlichen und/oder synthetischen Fasern als Reißwolle ausgebildet sind. Wie sich in Versuchen herausgestellt hat ergibt sich durch eine Ausbildung der Fasern aus Reißwolle eine recycelbare, kostengünstig und einfach herstellbare rutschhemmende Matte, die darüber hinaus eine besonders hohe Flexibilität aufweist.

Von Vorteil ist es, wenn die Klebefasern als Bicofasern ausgebildet sind.

Eine Ausbildung der Klebefasern als Bicofasern hat sich hinsichtlich der Reißkraft und des robusten Aufbaus als besonders vorteilhaft herausgestellt. Darüber hinaus ist eine Verarbeitung von Bicofasern, sowie deren Herstellung, in kostengünstiger Weise möglich.

Vorteilhafte Ausgestaltungen und Weiterbildungen der Erfindung ergeben sich aus den weiteren Unteransprüchen sowie aus dem nachfolgend anhand der Zeichnung prinzipmäßig dargestellten Ausführungsbeispiel.

Es zeigt:
- Fig. 1: eine vergrößert dargestellte Seitenansicht der erfindungsgemäßen rutschhemmenden Matte; und
- Fig. 2: eine Draufsicht auf die erfindungsgemäße rutschhemmende Matte aus Pfeilrichtung II der Figur 1.

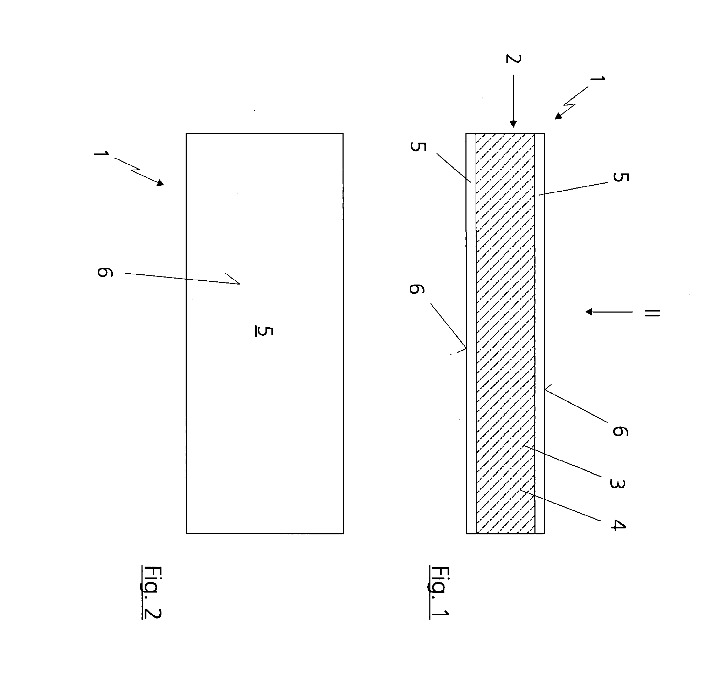

Die in Figur 1 und Figur 2 dargestellte rutschhemmende Matte 1 ist zur Einlage in einem Kofferraum eines Kraftfahrzeuges bestimmt, um dort eingelegte Gegenstände an einer seitlichen Verschiebung infolge der auftretenden Beschleunigungs-, Brems- oder Seitenkräfte zu hindern.

Die erfindungsgemäße rutschhemmende Matte 1 ist auf einen derartigen Einsatz nicht beschränkt. Vielmehr kann die rutschhemmende Matte 1 auch dazu dienen Ladungen auf glatten Ladeflächen beispielsweise von Lastkraftwagen zu blockieren. Die rutschhemmende Matte 1 eignet sich für unterschiedlich schwere Gegenstände. Die rutschhemmende Matte kann in Speditionen, Pkws, Caravans, Bussen und dergleichen eingesetzt werden. Ein Einsatz der rutschhemmenden Matte 1 ist jedoch auch in anderen Bereichen, beispielsweise in Zelten, Fitnessstudios sowie im privaten Haushalt als rutschhemmende Unterlage beispielsweise für Teppiche, Läufer und dergleichen möglich.

Die in Figur 1 und 2 dargestellte rutschhemmende Matte 1 setzt sich aus einer Materialschicht 2, die aus natürlichen Fasern 3 und Klebefasern 4 gebildet ist, sowie aus zwei Polymerschichten 5, die an beiden Seitenflächen 6 der Matte 1 angeordnet sind, zusammen. Die beiden Polymerschichten sind dabei als blockende, jedoch nicht klebende Polyurethanschichten 5 ausgebildet.

In einer alternativen Ausgestaltung der Matte 1 kann auch vorgesehen sein, dass nur eine Seitenfläche 6 der Matte 1 mit einer Polyurethanschicht 5 versehen ist. Dies kann für Einsatzzwecke geeignet sein, bei denen die Materialschicht 2 aus dem Verbund der Fasern 3 und der Klebefasern 4 mit einer angrenzenden Oberfläche bereits eine ausreichende Haftkraft aufbaut.

Im Ausführungsbeispiel ist eine Zusammensetzung der Matte 1 aus 8 bis 12 Gewichtsprozent Polyurethan und resultierend daraus 88 bis 92 Gewichtsprozent der aus Fasern 3 und Klebefasern 4 gebildeten Materialschicht 2 vorgesehen.

Die aus den Fasern 3/Klebefasern 4 gebildete Materialschicht 2 weist im Ausführungsbeispiel einen Anteil von 65 Gewichtsprozent natürliche Fasern 3 und resultierend daraus einen Anteil von 35 Gewichtsprozent Klebefasern auf.

Im Ausführungsbeispiel ist vorgesehen, dass die Klebefasern als Bicofasern 4 ausgebildet sind. Derartige Fasern sind aus anderen Anwendungen hinlänglich bekannt, so dass hierauf nicht näher eingegangen wird. Im Ausführungsbeispiel ist ferner vorgesehen, dass die natürlichen Fasern als Reißwolle 3 ausgebildet sind. Die Herstellung von Reißwolle ist aus anderen Anwendungen hinlänglich bekannt, so dass hierauf ebenfalls nicht näher eingegangen wird.

Alternativ zu der Ausbildung der natürlichen Fasern als Reißwolle kann auch eine Ausbildung aus Wolle, Baumwolle, Kunststofffasern oder dergleichen vorgesehen sein.

Anstelle der natürlichen Fasern bzw. der im Ausführungsbeispiel dargestellten Reißwolle können auch synthetische Fasern eingesetzt werden. Möglich ist dabei auch ein Kombination von natürlichen und synthetischen Fasern.

Die im Ausführungsbeispiel dargestellte rutschhemmende Matte weist ein Dicke von 4 mm auf. Dabei kann die Dicke der rutschhemmenden Matte 1 beispielsweise für die Beförderung von leichten Gegenständen auf 3 mm reduziert werden. Zur Beförderung von schweren Ladungen, beispielsweise von Papier-Coils kann hingegen eine Dicke von 5 mm gewählt werden.

Die im Ausführungsbeispiel dargestellte rutschhemmende Matte 1 weist ein Standardformat von 80 X 15 cm auf. Dieses Format hat sich für den Einsatz als besonders geeignet herausgestellt. Aufgrund der leichten Bearbeitung der Matte 1, z.B. mit einer Schere, kann die Matte jedoch auch einfach in eine andere Form gebracht werden. Ebenfalls können werksmäßig problemlos Sonderformate hergestellt werden. Die in dem Standardformate hergestellte Matte 1 mit eine Dicke von 4 mm weist ein Gewicht von ca. 550 Gramm auf.

Die Polyurethanschicht 5 kann in einfacher Weise individuell bedruckt werden.

Die Bildung der Materialschicht 2 bestehend aus der Reißwolle 3 und den Bicofasern 4 ist eine dem Fachmann vertraute Maßnahme, sodass hierauf nicht näher eingegangen wird. Die derart hergestellte Materialschicht 2 wird auch als Filz bzw. Nadelfilz bezeichnet.

## Patentansprüche

1. Rutschhemmende Matte, insbesondere zur Sicherung von Ladungen,
**gekennzeichnet durch**,
eine Zusammensetzung aus natürlichen und/oder synthetischen Fasern (3) im Verbund mit Klebefasern (4), wobei wenigstens eine Seitenfläche der Matte (1) mit einer Polymerschicht (5) versehen ist.

2. Rutschhemmende Matte nach Anspruch 1,
**dadurch gekennzeichnet, dass**
die aus den Fasern (3) und Klebefasern (4) gebildete Materialschicht (2) einen Anteil von 50 bis 80 Gewichtsprozent, vorzugsweise 65 Prozent natürliche und/oder synthetische Fasern (3) und ein Anteil von 20 bis 50 Gewichtsprozent, vorzugsweise 35 Prozent Klebefasern (4) aufweist.

3. Rutschhemmende Matte nach Anspruch 1 oder 2,
**dadurch gekennzeichnet, dass**
die Klebefasern als Bicofasern (4) ausgebildet sind.

4. Rutschhemmende Matte nach Anspruch 1, 2 oder 3,
**dadurch gekennzeichnet, dass**
die Fasern (3) als Wolle, Baumwolle, Kunstfaser oder dergleichen ausgebildet sind.

5. Rutschhemmende Matte nach einem Ansprüche 1 bis 4,
**dadurch gekennzeichnet, dass**
die Fasern als Reißwolle (3) ausgebildet sind.

6. Rutschhemmende Matte nach einem der Ansprüche 1 bis 5,
**dadurch gekennzeichnet, dass**
beide Seitenflächen (6) der Matte (1) mit einer rutschhemmenden bzw. blockenden Polymerschicht (5) versehen sind.

7. Rutschhemmende Matte nach einem der Ansprüche 1 bis 6,
**dadurch gekennzeichnet, dass**
die Polymerschicht als Polyurethanschicht (5) ausgebildet ist.

8. Rutschhemmende Matte nach einem der Ansprüche 1 bis 7,
**gekennzeichnet durch**,
eine Dicke von 3 bis 5 mm, vorzugsweise 4 mm.
